# EUROPÄISCHE PATENTSCHRIFT

(11) **EP 2 366 586 B1**
(45) Veröffentlichungstag und Bekanntmachung des Hinweises auf die Patenterteilung: **19.07.2017**
(21) Anmeldenummer: 11000845.5
(22) Anmeldetag: 03.02.2011
(51) Int. Cl.: B60Q 1/04

(54) **Scheinwerfereinheit für ein Kraftfahrzeug**
Headlight unit for a motor vehicle
Bloc optique pour véhicule automobile

(30) Priorität: 01.03.2010 DE 102010009733
(43) Veröffentlichungstag der Anmeldung: 21.09.2011
(73) Patentinhaber: Audi AG, 85045 Ingolstadt (DE)
(72) Erfinder: Balke, Reinhard, 85049 Ingolstadt (DE)
(74) Vertreter: Engelhardt, Harald

(56) Entgegenhaltungen:
- EP-A2- 2 133 235
- WO-A2-2010/127884
- DE-A1- 10 348 228

## Beschreibung

Die Erfindung betrifft eine Scheinwerfereinheit für ein Kraftfahrzeug. Eine allgemein bekannte Scheinwerfereinheit besteht aus einem, eine Leuchttechnik enthaltenden Scheinwerfer-Gehäuse und einer damit toleranzbehaftet verbundenen Streuscheibe, deren Streuscheibenkontur im eingebauten Zustand das Fugenbild zu anschließenden Bauteilen am Fahrzeug bestimmt. Am Gehäuse sind zudem Anschlusselemente für einen Einbau und einen Anschluss an am Kraftfahrzeug aufbauseitig lagedefinierten Anschlussstellen angebracht.

Die Anschlusselemente sind üblicherweise als am Gehäuse angeformte Laschen ausgebildet, mit einer Durchsteckbohrung für Anschlussschrauben, die an den aufbauseitigen Anschlussstellen in Verbindung mit Einstell- und Ausgleichselementen, wie beispielsweise Hohlschrauben eingeschraubt werden. Die aufbauseitigen Anschlussstellen sind üblicherweise genau lagedefiniert in einem aufbauseitigen RPS-System (Referenz-Punkt-System) und durch entsprechende RPS-Punkte bestimmt.

Um den hohen Ansprüchen an die Fugenoptik bei modernen Kraftfahrzeugen zu genügen, sind trotz der lagegenauen Definition der aufbauseitigen Anschlussstellen ist aufgrund der Eigentoleranzen der Scheinwerfereinheiten einstellbare Ausgleichselemente bei der Montagepositionierung der Scheinwerfereinheiten erforderlich. Die Eigentoleranzen der Scheinwerfereinheiten setzen sich zusammen aus Lagetoleranzen der Streuscheibe gegenüber dem Gehäuse, aus Toleranzen bei den gehäuseseitigen Anschlusselementen und Schraubpunkten sowie aus Formtoleranzen der Streuscheibe sowie des Gehäuses. Um diese Eigentoleranzen der Scheinwerfereinheiten auszugleichen, sind neben dem Aufwand für zusätzliche Einstell- und Ausgleichselemente manuelle Justierungen in der Endmontage erforderlich, die die Scheinwerfermontage insgesamt aufwendig und kostenintensiv gestalten.

Eine konkrete Scheinwerfereinheit ist beispielsweise aus der DE 41 20 503 A1 bekannt. Hier geht es jedoch anders als in der vorliegenden Erfindung darum, die Leuchttechnik aus einer Abblendlicht- und Fernlichtleuchte im Gehäuse gegeneinander zu justieren und einzustellen, wobei elastisch verformbare und später durch Zusatzmaßnahmen aushärtbare Einstellelemente Verwendung finden. Aus der nachveröffentlichten WO 2010/127884 A2 ist eine Scheinwerfereinheit bekannt, wobei die Anschlussstellen der am Gehäuse angebrachten Anschlusselemente mittels von durch Wärmeeinwirkung aushärtende Binde/Klebemittel einstellbar sind.

Aufgabe der Erfindung ist es, eine Scheinwerfereinheit so weiterzubilden, dass damit der Teile- und Montageaufwand beim Einbau ins Fahrzeug verringert wird. Diese Aufgabe wird für die Scheinwerfereinheit dadurch gelöst, dass die Anschlusselemente am Gehäuse bezüglich der Streuscheibenkontur dergestalt bei jeder Scheinwerfereinheit individuell und bleibend durch eine Verformung eingestellt sind, dass jeweils Toleranzen in der Relativlage Streuscheibenkontur/Anschlusselemente durch die Einstellung ausgeglichen sind und damit ein direkter Anschluss und Einbau an den aufbauseitig lagedefinierten Anschlussstellen ohne zusätzliche Einstellelemente und ohne manuelles Justieren in der Endmontage durchführbar ist.

Eine solche individuell durch Verformung bleibend eigentoleranzreduzierte Scheinwerfereinheit ist daher für einen schnellen kostengünstigen Direkteinbau am Fahrzeug geeignet, wobei vorteilhaft Ausgleichselemente eingespart und Montagezeiten reduziert werden können. Vorrausetzung für eine solche erfindungsgemäße Montage ist, dass die aufbauseitigen Anschlussstellen ausreichend genau lagedefiniert sind.

Die aufbauseitig lagedefinierten Anschlussstellen können hier in üblicher Weise durch eine Anlagefläche mit einer Schraubbohrung in einem RPS-System (Referenz-Punkt-System) über zugeordnete RPS-Punkte bestimmt sein.

Eine einfache Einstellmöglichkeit im Sinne der Erfindung ergibt sich, wenn das Gehäuse aus einem Thermoplast-Kunststoffmaterial mit angespritzten Anschlusslaschen hergestellt ist und die Materialeigenschaften für eine Einstellverformung ausgenützt werden, indem durch Wärmeeinwirkung über eine plastische und nach dem anschließenden Abkühlen bleibende Verformung die Toleranzausgleichseinstellung durchgeführt wird.

In einer bevorzugten konkreten Ausführungsform werden dabei in den Anschlusslaschen durch Wärmeeinwirkung nicht verformbare Buchsen, vorzugsweise Metallbuchsen eingefügt, welche jeweils lagebestimmend eine Anlagefläche zur aufbauseitigen Anlagefläche hin und eine Bohrung zur Aufnahme einer Befestigungsschraube aufweisen. Beim Fügen der Buchse in die Anschlusslasche kann durch Wärmeeinwirkung des Fügeprozesses und durch plastische Verformung des umgebenden thermoplastischen Kunststoffmaterials die Buchse in ihrer Relativlage zur fugenbestimmenden Streuscheibenkontur exakt eingestellt werden. Nach dem Abkühlen bleibt diese Einstellung jeweils individuell für die jeweilige Scheinwerfereinheit erhalten. Der Aufwand für diese Einstellung ist relativ gering und vorteilhaft von der Endmontage entkoppelt.

Die Metallbuchsen weisen die erforderliche Stabilität für eine Anschraubverbindung auf und können zudem für eine Erwärmung verwendet werden.

Wie oben erwähnt kann beispielhaft über die stirnseitigen Anlageflächen der Buchse positioniert werden. Alternativ dazu ist es auch denkbar, über den Durchmesser der Buchse, etwa in Kombination mit Passbundschrauben, zu positionieren. Vor diesem Hintergrund ist die im Zusammenhang mit der Erfindung verwendete Anlagefläche allgemein zu verstehen und nicht auf die oben genannte Anlagefläche der Buchse beschränkt. Bezüglich des Herstellverfahrens wird zur toleranzausgleichenden Lageeinstellung der Anschlusselemente, insbesondere von Metallbuchsen in Anschlusslaschen, die Scheinwerfereinheit in einem ersten Verfahrensschritt in ein dem Einbaubezugsystem, insbesondere dem fahrzeugseitigen RPS-System nachgebildetes Referenzbezugsystem eingebracht. In einem weiteren Verfahrensschritt wird dann durch den Verformungsprozess die toleranzausgleichende Einstellung durchgeführt. Damit werden die späteren Einbaulageverhältnisse, wie sie später am Fahrzeug vorliegen, vorzugsweise am Herstellort der Scheinwerfereinheit simuliert und nachgebildet, so dass bereits dort die toleranzausgleichende Einstellverformung in Verbindung mit der Herstellung erfolgen kann. Somit kann die toleranzausgleichende Einstellung von der Endmontage beim Fahrzeughersteller entkoppelt und zu einem Scheinwerferhersteller und Zulieferer verlagert werden, wodurch sich Kostenvorteile ergeben können.

Das nachgebildete und simulierte Referenzbezugssystem für eine Soll-Einbaulage kann als mechanische Aufnahme ausgeführt sein, in die jeweils eine Scheinwerfereinheit eingesetzt wird, und in der für die toleranzausgleichende Einstellung eine Negativkontur der Streuscheibenkontur und die aufbauseitigen Anschlussstellen nachgebildet sind. Alternativ dazu kann eine solche Nachbildung eines Referenzbezugssystem auch mit Hilfe eines an sich bekannten berührungslos arbeitenden Messsystems realisiert werden. Zudem können die Scheinwerfereinheiten in beide alternativen Referenzbezugssysteme automatisiert eingebracht und auch die toleranzausgleichenden Einstellungen beispielsweise über Roboter automatisch durchgeführt werden.

Bei einer Ausführungsform des Gehäuses mit Anschlusslaschen und eingefügten Metallbuchsen kann die toleranzausgleichende Einstellung besonders einfach und funktionssicher mit folgendem Herstellungsschritt durchgeführt werden: während des Fügeprozesses werden in die Buchsen erhitzte oder elektrisch erhitzbare Bolzen eingesteckt, so dass sich die Metallbuchsen durch Wärmeübertragung so weit erwärmen, dass das angrenzende thermoplastische Material der Anschlusslaschen plastisch verformbar wird. In diesem Zustand wird dann die Positionierung der Metallbuchsen für die toleranzausgleichende Einstellung im Referenzbezugssystem durch entsprechende Verlagerung der Metallbuchse vorgenommen. Auch zu dieser Einstell-Verlagerung können die eingesteckten Bolzen verwendet werden. Nach dem Abkühlen und Entfernen der Bolzen ist das thermoplastische Material wieder fest und die durchgeführte Einstellung bleibt erhalten, wodurch die Scheinwerfereinheit für einen toleranzoptimierten Direkteinbau am Fahrzeug vorbereitet ist.

Anhand einer Zeichnung wird die Erfindung weiter erläutert.

Es zeigen:
- Fig. 1: eine perspektivische Draufsicht von vorne auf eine Scheinwerfereinheit, und
- Fig. 2: einen schematischen Schnitt eines Teilbereichs aus Fig. 1 entlang der Linie A-A.

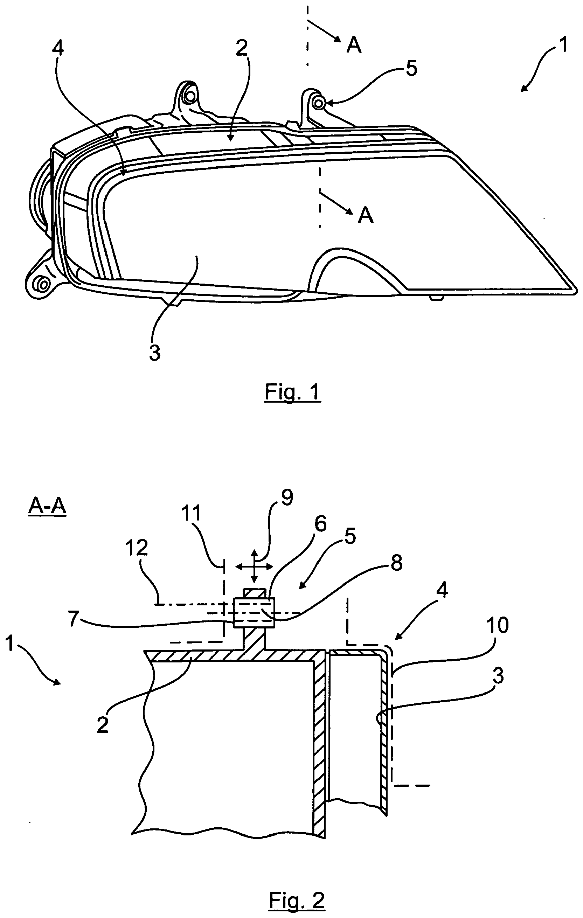

In Fig. 1 ist eine Scheinwerfereinheit 1 für ein Kraftfahrzeug gezeigt mit einem, eine Leuchttechnik enthaltenden Scheinwerfergehäuse 2 und einer damit toleranzbehaftet verbundenen Streuscheibe 3, deren Streuscheibenkontur 4 im Anschlussbereich zu weiteren Fahrzeugteilen das dortige Fugenbild bestimmt.

Das Gehäuse 2 ist aus einem Thermoplast-Kunststoffmaterial hergestellt und für eine Montage sind mehrere Anschlusslaschen 5 am Gehäuse 2 angespritzt.

In der schematischen Schnittdarstellung nach Fig. 2 wird ein Teilbereich der Scheinwerfereinheit 1 mit einem Gehäusebereich 2, einem Streuscheibenbereich 3 und einer Anschlusslasche 5 mit weiteren Details gezeigt: in der Anschlusslasche 5 ist eine Metallbuchse 6 eingefügt, die sowohl eine lagebestimmende Anlagefläche 7 als auch eine lagebestimmende Bohrung 8 zur Aufnahme einer Befestigungsschraube aufweist.

Bei einer ausreichenden Erwärmung der Metallbuchse 6 kann das umgebende thermoplastische Kunststoffmaterial so weit verformt werden, dass die Metallbuchse 6 frei in ihrer Lage einstellbar ist (angedeutet durch die Pfeile 9). Insbesondere können damit die Anlagefläche 7 und die Bohrung 8 in einem Referenzbezugssystem in eine toleranzoptimierte Lage eingestellt werden. Das Referenzbezugssystem ist hier für die Lage der Streuscheibenkontur 4 durch die strichlierte Linie 10 angegeben. Die nach dem Einbau fugenbestimmende Streuscheibenkontur 4 liegt hier an der strichlierten Linie 10 an, wobei diese Anlage in einer mechanischen Aufnahme oder virtuell in einem Messsystem realisiert werden kann. Demgegenüber sind die toleranzoptimierte Anlageposition und Lage der Schraubstelle für die Metallbuchse 6 im Soll-Referenzbezugssystem durch die strichlierte Linie 11 und strichpunktierte Linie 12 angegeben.

Fig. 2 zeigt eine noch nicht eingestellte Lage der Metallbuchse 6, welche toleranzbehaftet ersichtlich zu weit rechts und zu tief gegenüber der gewünschten Sollposition (strichlierte Linie 11; strichpunktierte Linie 12) liegt. Nach einer Erwärmung der Metallbuchse 6, gegebenenfalls in Verbindung mit einem Fügeprozess, wird bei plastisch verformbarem, umgebenden Material die Metallbuchse 6 bezüglich der strichlierten Linie 11 zur Anlage gebracht und bezüglich der strichpunktierten 12 fluchtend ausgerichtet, so dass Eigentoleranzen der Scheinwerfereinheit 1 für einen fugenoptimierten Direkteinbau am Fahrzeug ausgeglichen sind.

## Patentansprüche

1. Scheinwerfereinheit (1) für ein Kraftfahrzeug mit einem eine Leuchttechnik enthaltenden Scheinwerfer-Gehäuse (2) und einer damit toleranzbehaftet verbundenen Streuscheibe (3), deren Streuscheibenkontur (4) im eingebauten Zustand das Fugenbild zu anschließenden Bauteilen bestimmt, wobei am Gehäuse (2) Anschlusselemente (5, 6) für einen Einbau und Anschluss an am Kraftfahrzeug aufbauseitig lagedefinierten Anschlussstellen angebracht sind, wobei die Anschlusselemente (5, 6) am Gehäuse (2) bezüglich der Streuscheibenkontur (4) dergestalt bei jeder Scheinwerfereinheit (1) individuell und bleibend durch eine Verformung eingestellt sind, dass jeweils Toleranzen in der Relativlage Streuscheibenkontur (4)/Anschlusselemente (5, 6) durch die Einstellung ausgeglichen sind und damit ein direkter Anschluss und Einbau an den aufbauseitig lagedefinierten Anschlussstellen ohne zusätzliche Einstellelemente und ohne manuelles Justieren in der Endmontage durchführbar ist, wobei das Gehäuse (2) aus einem Thermoplast-Kunststoffmaterial hergestellt ist und die Anschlusselemente angespritzte Anschlusslaschen (5) sind, deren Anschlussstellen am Gehäuse (2) durch Wärmeeinwirkung über eine plastische Verformung in ihrer Lage einstellbar sind.

2. Scheinwerfereinheit nach Anspruch 1, **dadurch gekennzeichnet, dass** in den Anschlusslaschen (5) als Anschlussstellen durch Wärmeeinwirkung nicht verformbare Buchsen (6) eingefügt sind, die jeweils lagebestimmend eine Anlagefläche (7) zur aufbauseitigen Anlagefläche (11) hin und eine Bohrung (8) zur Aufnahme einer Befestigungsschraube aufweisen, und
dass beim Fügen der Buchse (6) durch Wärmeeinwirkung während des Fügeprozesses und durch plastische Verformung des umgebenden Kunststoffmaterials die Buchse (6) in ihrer Relativlage zur Streuscheibenkontur (4) einstellbar ist.

3. Scheinwerfereinheit nach Anspruch 2, **dadurch gekennzeichnet, dass** die Buchsen Metallbuchsen (5) sind, die für die Relativlageneinstellung erwärmbar sind.

## Claims

1. Headlamp unit (1) for a motor vehicle having a headlamp housing (2) containing lighting technology and a scattering disc (3) connected thereto in a manner subject to tolerances whose scattering disc contour (4) in the installed state determines the joint pattern to components to be connected, wherein connection elements (5, 6) are arranged on the housing (2) for installing and connecting connection points in a specific position on the body of the motor vehicle, wherein the connection elements (5, 6) are configured on the housing (2) with respect to the scattering disc contour (4) for each headlamp unit (1) individually and permanently by a deformation in such a way that tolerances are respectively balanced out in the relative position of the scattering disc contour (4)/connection elements (5, 6) by the configuration and thus a direct connection and installation on the connection points that are in a specific position on the body of vehicle can be carried out without additional adjusting elements and without manual adjustment in the end assembly, wherein the housing (2) is manufactured from a thermoplastic plastic material and the connection elements are injected connection lugs (5), whose connection points can be adjusted in their position on the housing (2) via plastic deformation by means of heat application.

2. Headlamp unit according to claim 1, **characterised in that** non-deformable bushings (6) are inserted into the connection lugs (5) as connection points by means of heat application, said bushings, in a manner determining the position, respectively have a contact surface (7) towards the vehicle body-side contact surface (11) and a drill hole (8) for receiving a fastening screw, and **in that** the bushing (6) can be adjusted in its relative position to the scattering disc contour (4) when the bushing (6) is joined by means of heat application during the joining process and by means of plastic deformation of the surrounding plastic material.

3. Headlamp unit according to claim 2, **characterised in that** the bushings are metal bushings (5) which can be heated for the adjustment of the relative position.

## Revendications

1. Bloc optique (1) pour un véhicule automobile avec un corps de projecteur (2) contenant une unité technique d'éclairage et avec un diffuseur (3) assemblé audit corps avec des tolérances de construction, le contour (4) dudit diffuseur déterminant à l'état monté la ligne de joint avec des pièces adjacentes, dans lequel des éléments de raccordement (5, 6) destinés au montage et au raccordement à des points de raccordement dans des positions définies côté carrosserie sur le véhicule automobile sont agencés au niveau du corps (2), dans lequel les éléments de raccordement (5, 6) au niveau du corps (2) sont positionnés de telle sorte par une déformation par rapport au contour de diffuseur (4), de manière individuelle et persistante pour chaque bloc optique (1), que des tolérances dans la position relative entre le contour de diffuseur (4) et les éléments de raccordement (5, 6) sont compensées par le positionnement et qu'un montage et un raccordement direct peuvent être effectués au niveau des points de raccordement dans des positions définies côté carrosserie sans élément de positionnement supplémentaire et sans ajustage manuel dans le montage final et dans lequel le corps (2) est fabriqué en une matière thermoplastique et les éléments de raccordement sont des éclisses de raccordement (5) surmoulées dont la position des points de raccordement au niveau du corps (2) peut être ajustée sous l'action de la chaleur via une déformation plastique.

2. Bloc optique selon la revendication 1, **caractérisé en ce que** des douilles (6) non déformables sous l'action de la chaleur, qui comportent chacune de manière à déterminer une position une surface d'appui (7) en direction de la surface d'appui (11) située côté carrosserie et un trou (8) destiné à recevoir une vis de fixation, sont insérées comme points de raccordement dans les éclisses de raccordement (5) et **en ce que**, lors de l'assemblage de la douille (6) sous l'action de la chaleur pendant le processus d'assemblage et par déformation plastique de la matière plastique environnante, la position relative de la douille (6) par rapport au contour de diffuseur (4) peut être ajustée.

3. Bloc optique selon la revendication 2, **caractérisé en ce que** les douilles sont des douilles métalliques (5) qui peuvent être chauffées pour l'ajustement de la position relative.
